# EUROPEAN PATENT APPLICATION

(11) **EP 1 227 250 A2**
(43) Date of publication of application: **31.07.2002**
(21) Application number: 01309405.7
(22) Date of filing: 06.11.2001
(51) Int. Cl.: F15B 15/28

(54) **Attachment structure for position-detecting sensors**

(30) Priority: 26.01.2001 JP 2001019075
(71) Applicant: SMC CORPORATION, Minato-ku, Tokyo 105-8659 (JP)
(72) Inventor: Sakurai, Kouji, c/o SMC Corp. Tsukuba Tech. Center, Tsukuba-Gun, Ibaraki-Ken 300-2493 (JP)
(74) Representative: Kensett, John Hinton

(57) **Abstract**

An attachment structure for position-detecting sensors wherein the attachment positions of the position-detecting sensors in the direction of stroke of a cylinder can be arbitrarily adjusted, and liquid is scarcely kept on the outer surface, making it possible to avoid the sanitary problem.

The sensor attachment mechanism 100 includes a rail member 104 secured to an outer side surface of the cylinder tube 14, and is formed to have sensor attachment grooves 108a, 108b to which the position-detecting sensors 114 are installed, and groove cover members 118a to 118d which are installed in all sensor attachment grooves 108a, 108b not occupied by the position-detecting sensors 114 in order to prevent the invasion of fluids and the like.

## Description

### Field of the Invention

The present invention relates to an attachment structure for position-detecting sensors having a function to adjust their detection position.

### Description of the Related Art

A fluid pressure-operated cylinder has been hitherto used as a driving means for transporting and positioning a workpiece and driving various industrial machines. In order to meet various needs of the user, for example, miniaturization and improvement of multiple functions in option setting or the like, the fluid pressure-operated cylinder is provided with a cylinder tube and accessory parts such as switches attached to the cylinder tube.

If liquid is allowed to remain on outer surfaces of a cylinder tube and a switch, various germs may be propagated in the liquid. Therefore, the present applicant proposed a sanitary position-detecting sensor. According to the position-detecting sensor, liquid naturally drips down from the surfaces of the cylinder tube and the switch. Therefore, the liquid is hardly kept on the surfaces of the cylinder tube and the switch. Though the position-detecting sensor has a position-adjusting mechanism, the main body of the position-detecting sensor is small. Therefore, the overall position-detecting sensor has a small size and a light weight (see Japanese Patent Application Serial Nos 2000-56437 and 2000-56440).

### SUMMARY OF THE INVENTION

The present invention is employed in connection with said proposals, having as an object to provide an attachment structure for position-detecting sensors in which the attachment position of the position-detecting sensors in the direction of stroke of a cylinder can be arbitrarily adjusted, the liquid is scarcely kept on the outer surface, and it is possible to avoid the sanitary problem.

In order to achieve this object, the present invention includes an attachment structure for position-detecting sensors for detecting positions of a piston accommodated in a cylinder chamber in a cylinder tube, said attachment structure for said position-detecting sensors comprising:
said position-detecting sensors including a detecting element for sensing a magnetic field of a magnet installed to said piston; and
a sensor attachment mechanism for holding said position-detecting sensors so that said position-detecting sensors are separated by a predetermined spacing distance from an outer side surface of said cylinder tube,
wherein said sensor attachment mechanism includes a rail member having sensor attachment grooves formed in the axial direction to which said position-detecting sensors are installed and which is secured to the outer side surface of said cylinder tube, and groove cover members which are inlayed into all sensor attachment grooves not occupied by said position-detecting sensors in order to prevent the invasion of liquids and the like into said sensor attachment grooves.

A chamfered curved portion having a predetermined radius of curvature may be formed on the side portion of said rail member. Further, said groove cover members may be formed of a flexible material containing rubber materials or resin materials. Further, clearance may be provided between said rail member and the outer side surface of the cylinder tube. Still further, sensor attachment grooves may be formed on the side surface of said cylinder tube so that position-detecting sensors and groove cover members can be installed directly with respect to said sensor attachment grooves.

Said groove cover members may be shaped to correspond to the cross sectional form of the sensor attachment grooves and formed with curved portions having a circular arc-shaped cross section for the part which projects from said sensor attachment grooves and is externally exposed.

In accordance with the present invention, pooling of liquid scarcely occurs and adhered liquid drips and falls spontaneously, because a sensor attachment mechanism is provided having a rail member secured to an outer side surface of the cylinder tube on which sensor attachment grooves are formed for installing position-detecting sensors, and groove cover members to cover the sensor attachment grooves not occupied by position-detecting sensors.

In accordance with the present invention, the following effects are obtained.

Parts such as the rail member, which comprise the sensor attachment mechanism, are sealed by the groove cover members to prevent invasion of liquids adhered to the outer surface into the sensor attachment grooves. Moreover, liquid pool does not occur and the sanitary problem is avoided, because liquid drips and falls spontaneously from curved portions and the like which are formed on the outer surfaces of said rail member.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

Figure 1 shows a perspective view illustrating a state in which position-detecting sensors are equipped on a side surface of a cylinder by the aid of a sensor attachment mechanism according to an embodiment of the present invention;
Figure 2 shows a front view illustrating the cylinder shown in Figure 1;
Figure 3 shows a longitudinal sectional view taken along a line III-III shown in Figure 2;
Figure 4 shows a magnified longitudinal sectional view illustrating portion A shown in Figure 3;
Figure 5 shows a partial magnified longitudinal sectional view illustrating a cylinder concerning Comparative Example;
Figure 6 shows a front view illustrating the sensor attachment mechanism according to the embodiment of the present invention;
Figure 7 shows a plane view illustrating the sensor attachment mechanism shown in Figure 6;
Figure 8 shows a side view illustrating the sensor attachment mechanism shown in Figure 6;
Figure 9 shows a perspective view illustrating a rail member which constitutes the sensor attachment mechanism shown in Figure 6;
Figure 10 shows a perspective view illustrating a state in which position-detecting sensors are equipped on a side surface of a cylinder by the aid of a sensor attachment mechanism according to another embodiment of the present invention;
Figure 11 shows a front view illustrating the cylinder shown in Figure 10;
Figure 12 shows a side view illustrating the cylinder shown in Figure 10;

### DESCRIPTION OF THE PREFERRED EMBODIMENTS

The attachment mechanism for position-detecting sensors of the present invention will be described in detail below as exemplified by preferred embodiments and with reference to the attached drawings.

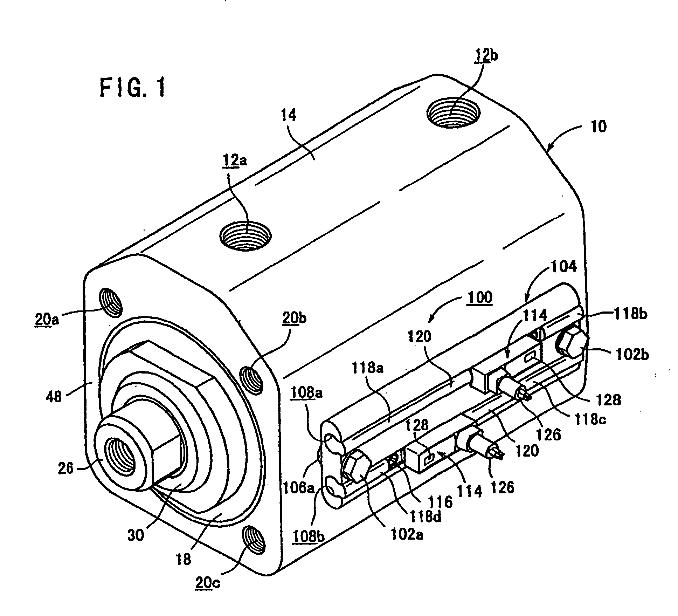

Figure 1 shows a perspective view illustrating a state in which position-detecting sensors are equipped on a side surface of a cylinder by the aid of a sensor attachment mechanism according to an embodiment of the present invention.

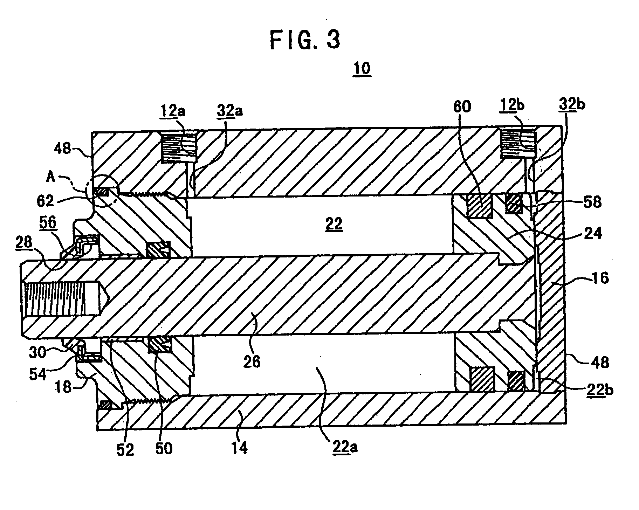

The cylinder 10 includes a substantially cylindrical cylinder tube 14 having a pair of pressure fluid inlet/outlet ports 12a, 12b separated from each other by a predetermined spacing distance, a head cover 16 secured to an end of the cylinder tube 14, and a rod cover 18 fitted into a screw hole on the other end of the cylinder tube 14 (see Figure 3).

The cylinder tube 14 is formed with four attachment holes 20a to 20d which make penetration in the axial direction. The cylinder 10 can be conveniently attached, for example, to a wall surface by screwing unillustrated screw members into screw portions of the attachment holes 20a to 20d or by inserting unillustrated bolts into the attachment holes 20a to 20d.

A shown in Figure 3, the cylinder 10 further includes a piston 24 which is displaceable along a cylinder chamber 22 closed by the head cover 16 and the rod cover 18 in the cylinder tube 14, a piston rod 26 which has an end fastened to the piston 24 and the other end exposed to the outside, and a scraper 30 which is installed to an annular recess of the rod cover 18 and which is formed with a hole 28 for surrounding the outer circumferential surface of the piston rod 26.

The pair of pressure fluid inlet/outlet ports 12a, 12b are provided to make communication with the cylinder chamber 22 via passages 32a, 32b respectively.

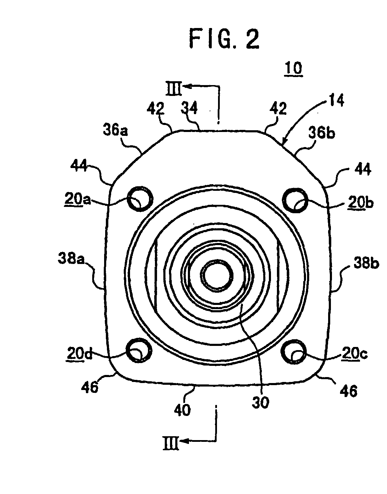

As shown in Figure 2, the outer circumferential surface of the cylinder tube 14 includes, in the circumferential direction, an upper surface 34 which is formed with the pair of pressure fluid inlet/outlet ports 12a, 12b, a pair of inclined surfaces 36a, 36b which are continued to the upper surface 34 and which are inclined by predetermined angles, a pair of side surfaces 38a, 38b which are continued to the inclined surfaces 36a, 36b and which are opposed to one another, and a bottom surface 40 which is continued to the pair of side surfaces 38a, 38b respectively.

First chamfered sections 42, each of which has a predetermined radius of curvature, are formed at boundary portions between the upper surface 34 and the inclined surfaces 36a, 36b. Second chamfered sections 44, each of which has a predetermined radius of curvature, are formed at boundary portions between the inclined surfaces 36a, 36b and the side surfaces 38a, 38b. Third chamfered sections 46, each of which has a predetermined radius of curvature, are formed at boundary portions between the side surfaces 38a, 38b and the bottom surface 40.

In this arrangement, the upper surface 34, the pair of inclined surfaces 36a, 36b, the pair of side surfaces 38a, 38b, and the bottom surface 40, which constitute the outer circumferential surface of the cylinder tube 14, have the predetermined radiuses of curvature respectively, and they are formed by curved surfaces which are convex toward the outside.

As described above, all of the outer circumferential surface portions of the cylinder tube 14, which are disposed in the circumferential direction of the cylinder tube 14, are constructed by the outwardly convex curved surfaces and the first to third chamfered sections 42, 44, 46. Further, the other side surfaces except for the outer circumference surfaces disposed in the circumferential direction described above are formed as the upstanding surfaces (substantially vertical surfaces) 48. Accordingly, the cylinder tube 14 is designed to have such a shape that any liquid adhered to the outer surface of the cylinder tube 14 spontaneously drips and falls.

Therefore, no liquid pool appears, because no recess is formed on the outer circumferential surface of the cylinder tube 14 disposed in the circumferential direction. It is possible to avoid such a sanitary problem that various germs are propagated due to the liquid.

As shown in Figure 3, the head cover 16 is caulked into the hole of the cylinder tube 14. The connecting portion between the head cover 16 and the cylinder tube 14 is formed to function as a metal seal which retains the cylinder chamber 22 in an air-tight manner and which prevents invasion of liquid or the like from the outside.

A rod packing 50 is installed to the inner circumferential surface of the rod cover 18 by the aid of an annular groove. The outer circumferential surface of the piston rod 26 is surrounded by the rod packing 50, and thus the cylinder chamber 22 is held in an air-tight manner and in a liquid-tight manner. A cylindrical bush 52 is installed to an annular recess which is formed on the inner circumferential surface of the rod cover 18. The scraper 30, in which a metal piece 54 is molded with a rubber material, is installed to an annular recess which is formed at the end of the rod cover 18. An annular chamber 56, which functions as an oil pool for lubricating oil adhered to the outer circumferential surface of the piston rod 26, is formed between the scraper 30 and the rod cover 18.

A piston packing 58, which makes sliding contact with the inner wall surface of the cylinder chamber 22 and which divides the cylinder chamber 22 into a first cylinder chamber 22a and a second cylinder chamber 22b, is installed to the outer circumferential surface of the piston 24 by the aid of an annular groove. Further, a magnet 60, which is composed of a ring member to surround the piston 24, is installed at a portion disposed in the vicinity of the piston packing 58 by the aid of an annular groove.

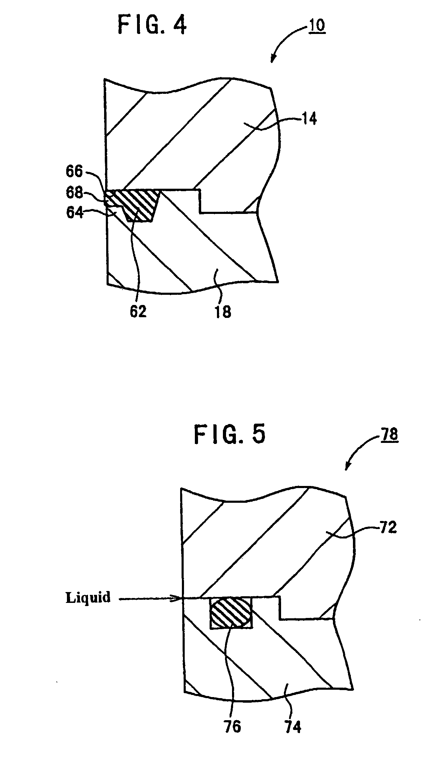

An annular seal member 62, which is formed of a flexible material such as rubber, is provided at one end of the connecting portion between the cylinder tube 14 and the rod cover 18 in the axial direction. As shown in Figure 4, a part of the seal member 62 is installed in a state of being forcibly interposed by a narrow spacing distance between an inner circumferential surface 66 of the cylinder tube 14 and an annular projection 64 formed on the rod cover 18.

That is, the annular seal member 62, which is formed to have its substantially constant wall thickness in the circumferential direction, is previously provided with a press margin to be forcibly interposed between the inner circumferential surface 66 of the cylinder tube 14 and the annular projection 64 formed on the outer circumferential surface of the rod cover 18. Therefore, even when any liquid or the like intends to enter the connecting portion between the cylinder tube 14 and the rod cover 18, the sealing is reliably effected by a forcibly interposed section 68 of the seal member 62. Thus, the liquid or the like does not enter the cylinder tube 14.

A pair of screw holes (not shown), which are separated from each other by a predetermined spacing distance, are formed on the side surface of the cylinder tube 14 in order to attach a rail member as described later on.

As shown in Figures 1 and 6 to 9, the sensor attachment mechanism 100 includes a rail member 104 which is secured to the side surface of the cylinder tube 14 with a predetermined spacing distance by the aid of hexagon head bolts 102a, 102b, each of which has a hexagonal head, screwed into screw holes formed on the side surface of the cylinder tube 14, and a pair of ring members 106a, 106b whose bottom surface is formed to have a circular arc-shaped cross section having a predetermined radius of curvature corresponding to the curved side surface of the cylinder tube 14, and which are interposed between the rail member 104 and the side surface of the cylinder tube 14.

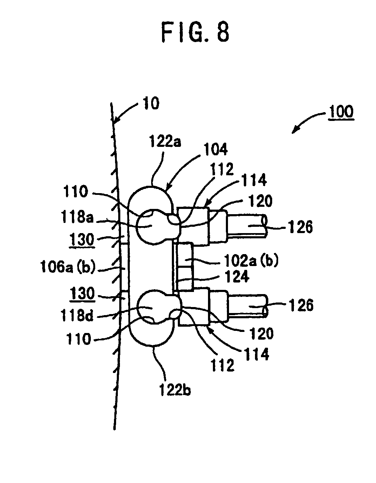

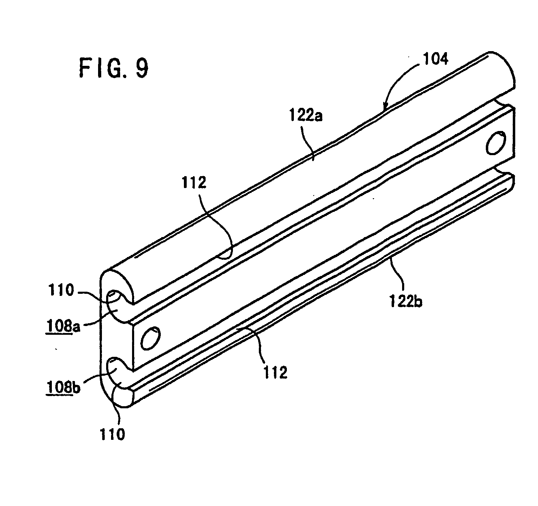

As shown in Figure 9, a pair of sensor attachment grooves 108a, 108b are formed essentially parallel and extending in the axial direction of the elongated plate-shaped rail member 104. The sensor attachment grooves 108a (108b) have the circular arc portions 110 formed with circular arc-shaped cross sections, and groove opening portions 112 formed so that the groove widths are substantially constant and are continued to the circular arc portions 110 (see Figure 8).

In this arrangement, position-detecting sensors 114 formed with cross sections corresponding to the circular arc portions 110 are inlayed into the circular arc portions 110, and the position-detecting sensors 114 are secured at the desired positions in the attachment grooves 108a, 108b by screwing in attachment screws 116 so that the end portions of the attachment screws 116 press the inner wall surface of the circular arc portions 110. Additionally, the positions of the position-detecting sensors 114 can be arbitrarily adjusted to a desired position within the sensor attachment grooves 108a, 108b by loosening the attachment screws 116.

Further, the sensor attachment mechanism 100 includes groove cover members 118a to 118d in order to cover all sensor attachment grooves not occupied by the position-detecting sensors 114 by performing a sealing function when installed in all sensor attachment grooves 108a, 108b not occupied by position-detecting sensors 114.

As shown in Figure 8, the groove cover members 118a to 118d have a cross sectional form corresponding to the circular arc portions 110 of the sensor attachment grooves 108a, 108b and the groove opening portions 112, and further, the portions which project from the sensor attachment grooves 108a, 108b and are externally exposed have curved surfaces 120 formed with a circular arc-shaped cross section.
the groove cover members 118a to 118d, for example, are formed of a rubber material such as silicon rubber or fluoro rubber, or a flexible material containing resin materials, which are used by cutting them to the desired lengths corresponding to the installed positions of the position-detecting sensors 114.

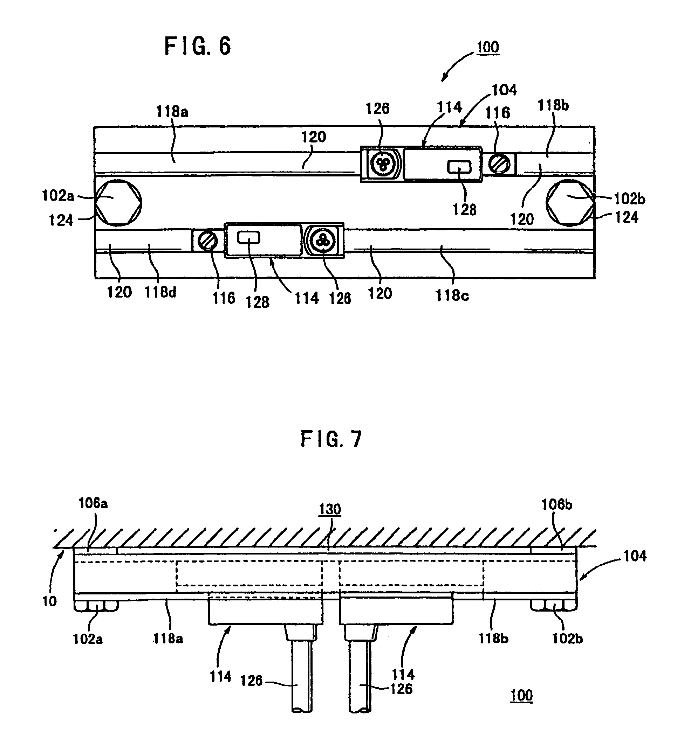

A pair of curved portions 122a, 122b with circular arc-shaped cross sections having outer surfaces each of which is chamfered to a predetermined radius of curvature, are formed on the opposing sides of the rail member 104. Therefore, it is formed so that any liquid adhered to the curved portions 122a, 122b of the rail member 104 spontaneously drips and falls. A ring-shaped plain washer 124, which functions to prevent loosening, is installed to the head of each of the hexagon head bolts 102a, 102b (see FIGS. 6 and 8).

The rail member 104 may be formed of, for example, a synthetic resin material or a metal material such as aluminum alloy and stainless steel.

The position-detecting sensors 114, which are formed of a different material and with a shape corresponding to the cross sectional shape of the sensor attachment grooves 108a (108b), are inlayed into the sensor attachment grooves 108a (108b).

Attachment screws 116, which fasten the position-detecting sensors 114 at desired positions in the sensor attachment grooves 108a, 108b by making penetration through the position-detecting sensors 114 and pressing the inner wall surface of the attachment grooves 108a, 108b in accordance with the increasing action of the screwing amount, are provided at one end of the position-detecting sensors 114. Lead wires 126 are connected to the other end of the position-detecting sensors 114.

As shown in Figures 1 and 6, an indicator section 128 having an oblong shape, through which the emitted light from an unillustrated light-emitting element is visible when the magnet 60 of the piston 24 is sensed, is provided at an intermediate portion of the position-detecting sensors 114. The indicator section 128 is formed of a transparent or semitransparent member. An appropriate clearance 130 is provided between the rail member 104 and the side surface of the cylinder tube 14. The position-detecting sensors 114 are arranged in a non-contact state with respect to the outer surface of the cylinder tube (see FIGS. 7 and 8).

That is, liquid pool may be generated when the position-detecting sensors 114 contact with the outer surface of the cylinder tube 14. Further, considering the drainage performance for the liquid adhered to the outer surface of the cylinder tube 14, it is preferable that the position-detecting sensors 114 are in a floating state by the aid of the appropriate clearance 130 In this case, it is preferable that the appropriate clearance is, for example, about 1 to 2 mm.

An unillustrated detecting element, which is composed of, for example, a Hall element or a magnetoresistive element, is provided in the position-detecting sensors 114. A detection signal can be led to the external equipment via the lead wire 126.

The cylinder 10, to which the sensor attachment mechanism 100 according to the embodiment of the present invention is applied, is basically constructed as described above. Next, its operation, function, and effect will be explained.

A pressure fluid (for example, air) is supplied from an unillustrated pressure fluid supply source to the first pressure fluid inlet/outlet port 12a. The pressure fluid, which is supplied to the first pressure fluid inlet/outlet port 12a, is introduced into the first cylinder chamber 22a via the passage 32a. Accordingly, the piston 24 is pressed toward the second cylinder chamber 22b.

When the piston 24 arrives at the displacement terminal end position in accordance with the action of the pressure fluid, the magnetic field of the magnet 60 installed to the piston 24 is sensed by the unillustrated detecting element of the position-detecting sensor 114. The position-detecting sensor 114 feeds the detection signal to the external equipment such as an unillustrated controller via the lead wire 126.

When the supply of the pressure fluid is switched from the first pressure fluid inlet/outlet port 12a to the second pressure fluid inlet/outlet port 12b in accordance with the switching action of an unillustrated directional control valve, then the piston 24 is displaced in the direction opposite to the above, and it is restored to the initial position. By doing so, the piston 24, which is accommodated in the cylinder tube 14, is successfully subjected to the reciprocating movement along the cylinder chamber 22.

When the cylinder 10, which is equipped with the position-detecting sensors 114 by the aid of the sensor attachment mechanism 100, is assembled, for example, to an unillustrated food processing machine to perform, for example, a washing operation, then any liquid adhered to the outer surfaces of the cylinder tube 14 and the sensor attachment mechanism 100 drips and falls with ease, and it is possible to avoid any occurrence of liquid pool on the outer surfaces of the cylinder tube 14 and the sensor attachment mechanism 100, because all of the outer circumferential surface of the cylinder tube 14 in the circumferential direction is constructed by the convex curved surfaces and the first to third chamfered sections 42, 44, 46 which are convex toward the outside, and the side portions of the rail member 104 of the sensor attachment mechanism 100 are formed by the curved portions 122a, 122b each of which has a predetermined radius of curvature.

Further, it is possible to prevent the invasion of liquid and the occurrence of liquid pool in the sensor attachment grooves 108a, 108b by inserting the groove cover members 118a to 118d to achieve a sealing function in all of the sensor attachment grooves 108a, 108b which are not occupied by the position-detecting sensors 114. In this case, liquid adhered to the outer surfaces of the groove cover members 118a to 118d spontaneously drips and falls, because the portions which project from the sensor attachment grooves 108a, 108b and are externally exposed have the curved surfaces 120 formed with a circular arc-shaped cross section.

As described above, the cylinder 10, which is equipped with the position-detecting sensors 114 by the aid of the sensor attachment mechanism 100, has such a contour shape that the liquid is scarcely kept on the outer surface, and the adhered liquid spontaneously drips and falls. Thus, it is possible to avoid the propagation of various germs, and it is possible to avoid the sanitary problem.

Further, the position-detecting sensors 114 can be positionally adjusted to desired positions in the sensor attachment grooves 108a, 108b by loosening the attachment screws 116. In this case, it is possible to set a large range of positional adjustment corresponding to the length of the rail member 104.

When the sensor attachment mechanism 100 is not used, the screw holes, which are formed on the side surface 38b of the cylinder 10, may be closed with unillustrated closing means such as bolts provided with seal washers.

Further, in case the positions of the position-detecting sensors 114 are changed, it is possible to conveniently achieve the sealing function for the sensor attachment grooves 108a, 108b by inserting into the sensor attachment grooves 108a, 108b new cover members which are cut to the desired lengths corresponding to the new positions set for the position-detecting sensors 114.

As shown in Figure 4, the cylinder 10 uses the seal member 62 which is previously provided with the press margin to be forcibly interposed under pressure between the inner circumferential surface 66 of the cylinder tube 14 and the annular projection 64 formed on the outer circumferential surface of the rod cover 18. In contrast, as shown in Figure 5, in the case of a cylinder 78 concerning Comparative Example in which an O-ring 76 having a circular cross section is installed to a connecting portion between a cylinder tube 72 and a rod cover 74, the liquid or the like makes invasion from the outside up to the portion at which the O-ring 76 is installed via the connecting portion between the cylinder tube 72 and the rod cover 74, and various germs are propagated due to the liquid or the like.

In other words, the O-ring 76, which is provided for the cylinder 78 concerning Comparative Example, has only a function to avoid the leakage of the air in the cylinder chamber to the outside. The liquid, which makes invasion via the connecting portion between the cylinder tube 72 and the rod cover 74, is capable of making further invasion up to the portion at which the O-ring 76 is installed. Therefore, various germs are propagated with ease due to the liquid.

In contrast, in the case of the cylinder 10, the sealing is reliably effected owing to the forcibly interposed section 68 of the seal member 62. Accordingly, it is possible to reliably prevent any invasion of liquid or the like from the outside into the cylinder tube 14 via the connecting portion between the cylinder tube 14 and the rod cover 18. As a result, the propagation of various germs, which would be otherwise caused by the liquid or the like invaded into the cylinder tube 14, is prevented.

The embodiment of the present invention has been explained as exemplified by the case in which the cylinder 10 is equipped with the position-detecting sensors 114. However, there is no limitation thereto. It is a matter of course that the present invention may be applied, for example, to various fluid pressure operated apparatuses such as unillustrated linear actuators and electric actuators.

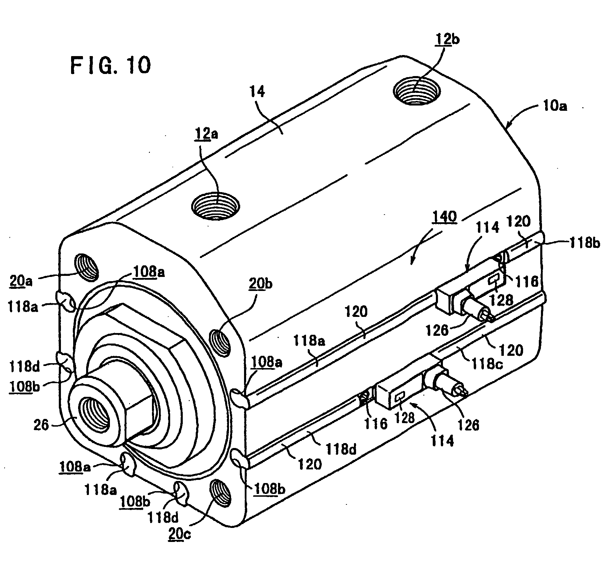

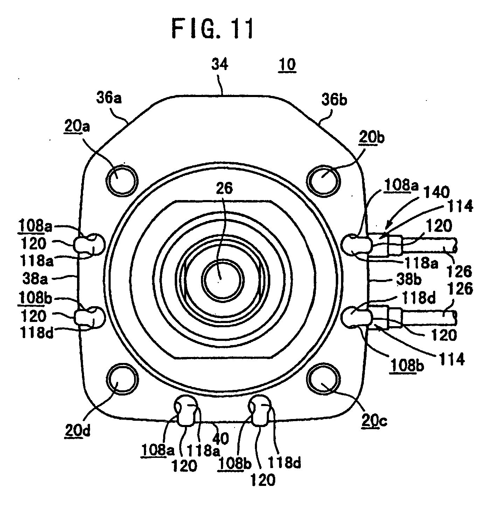

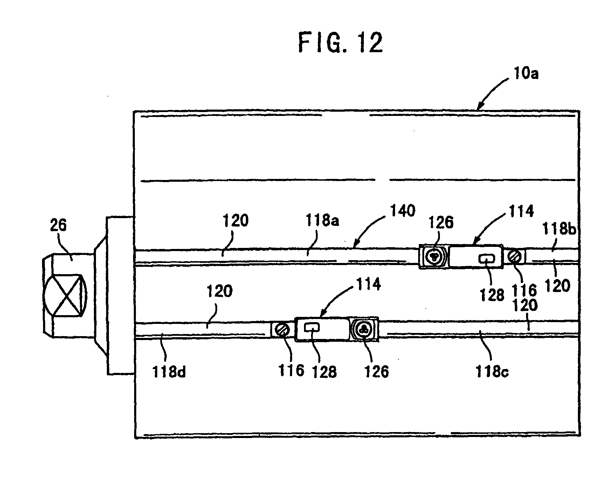

Next, a sensor attachment mechanism 140 according to another embodiment is shown in Figures 10 to 12. In the embodiment described below, the same constitutive components as those of the sensor attachment mechanism 100 shown in Figure 1 are designated by the same reference numerals, detailed explanation of which will be omitted.

The sensor attachment mechanism 140 according to another embodiment, differs in that, instead of using the rail member 104, essentially parallel pairs of sensor attachment grooves 108a, 108b are formed on each of three sides of the cylinder tube 14, and the position-detecting sensors 114 and groove cover members 118a to 118d are installed directly with respect to the sensor attachment grooves 108a, 108b.

The sensor attachment mechanism 140 according to this embodiment has the advantage of reducing cost by reducing the number of parts, because parts such as the rail member 104 and the pair of hexagon head bolts 120a, 102b are not required. A detailed explanation of other operational effects will be omitted, because they are the same as those of the sensor attachment mechanism 100 shown in Figure 1.

While the invention has been particularly shown and described with reference to preferred embodiments, it will be understood that variations and modifications can be effected thereto by those skilled in the art without departing from the spirit and scope of the invention as defined by the appended claims.

## Claims

1. An attachment structure for position-detecting sensors for detecting positions of a piston accommodated in a cylinder chamber in a cylinder tube, wherein:
said position-detecting sensors including a detecting element for sensing a magnetic field of a magnet installed to said piston; and
comprising a sensor attachment mechanism for holding said position-detecting sensors so that said position-detecting sensors are separated by a predetermined spacing distance from an outer side surface of said cylinder tube,
wherein said sensor attachment mechanism includes a rail member having sensor attachment grooves formed in the axial direction to which said position-detecting sensors are installed and which is secured to said outer side surface of said cylinder tube, and groove cover members which are inlayed into all sensor attachment grooves not occupied by said position-detecting sensors in order to prevent the invasion of liquids and the like into said sensor attachment grooves.

2. The attachment structure for said position-detecting sensors according to Claim 1,
wherein curved portions, each of which is chamfered with a predetermined radius of curvature, are formed on the side portions of said rail member.

3. The attachment structure for said position-detecting sensors according to Claim 1,
wherein said cover members are formed of a flexible material containing rubber materials or resin materials.

4. The attachment structure for said position-detecting sensors according to Claim 1,
wherein clearance is provided between said rail member and the outer side surface of the cylinder tube.

5. The attachment structure for said position-detecting sensors according to Claims 1 or 3, wherein said groove cover members are shaped to correspond to the cross sectional form of the sensor attachment grooves and are formed with curved portions having a circular arc-shaped cross section for the part which projects from said sensor attachment grooves and is externally exposed.

6. The attachment structure for said position-detecting sensors according to Claim 1,
wherein sensor attachment grooves are formed on the side surfaces of said cylinder tube, and position-detecting sensors and groove cover members are installed directly with respect to said sensor attachment grooves.
